# EUROPÄISCHE PATENTSCHRIFT

(11) **EP 2 745 956 B1**
(45) Veröffentlichungstag und Bekanntmachung des Hinweises auf die Patenterteilung: **25.01.2023**
(21) Anmeldenummer: 13005908.2
(22) Anmeldetag: 18.12.2013
(51) Int. Cl.: B22D 17/20, F16N 7/38

(54) **Druckgussvorrichtung, Schmiermittelversorgungssystem und Schmierverfahren**
Die-casting device, lubrication supply system and lubrication method
Dispositif de coulée sous pression, dispositif d'alimentation en lubrifiant et procédé de lubrification

(30) Priorität: 21.12.2012 DE 102012025447
(43) Veröffentlichungstag der Anmeldung: 25.06.2014
(73) Patentinhaber: Wieland-Werke AG, 89079 Ulm (DE)
(72) Erfinder: Wiedmann, Andreas, 88400 Biberach (DE); Rehm, Hansjörg, 89584 Ehingen (DE); Freudigmann, Alfons, 88471 Laupheim (DE)

(56) Entgegenhaltungen:
- DE-B4-102009 034 505
- US-A- 5 657 833
- US-A1- 2006 000 573
- US-A1- 2012 132 303

## Beschreibung

Die Erfindung betrifft eine Druckgussvorrichtung gemäß dem Oberbegriff des Anspruchs 1, sowie ein Schmierverfahren gemäß dem Oberbegriff des Anspruchs 8.

Druckgussmaschinen weisen bekanntlich eine Füllkammer mit einem darin verschiebbar angeordneten Druckgießkolben auf. Durch Verschieben des Kolbens wird flüssiges Gussmaterial von der Füllkammer in die Druckgussform eingebracht. Im regulären Betrieb muss der Druckgießkolben bei jedem "Schuss" mit einem Schmiermittel geschmiert werden, um den Verschleiß des Kolbens und der Füllkammerinnenwand zu minimieren. Eine Schmierung erfolgt durch eine Einrichtung hinter dem Druckgießkolben am stirnseitigen Ende der Kolbenstange. Bislang wurde für die verschleißreduzierende Schmierung eine vergleichsweise große Schmiermittelmenge benötigt. Die Steuerung und Überwachung des Schmiermittelverbrauchs spielt eine zunehmende Rolle, da eine Überdosierung von Schmiermittel unwirtschaftlich und auch ökologisch nicht sinnvoll ist und die Gussqualität wesentlich beeinflusst.

Neue Lösungen zur Reduzierung des Schmiermittelverbrauchs werden in der DE 10 2009 034 505 B4 beschrieben. In dieser Druckschrift wird eine Schmiereinrichtung offenbart, über die Schmierflüssigkeit zwischen einem Kolben und der Innenwandung der Füllkammer eingebracht wird. Hierzu ist eine Schmierflüssigkeitspumpe vorgesehen, welche die Schmierflüssigkeit von einem Reservoir zur Schmiereinrichtung pumpt. Bei der beschriebenen Lösung handelt es sich bei der Schmierflüssigkeitspumpe um eine Hubkolbenpumpe oder um eine Zahnradpumpe. Mit einer Hubkolbenpumpe oder einer Zahnradpumpe ist eine relativ exakte und gleichbleibende Dosierung der Schmiermittelmenge pro Schuss möglich. Diese Pumpensysteme weisen eine relativ geringe Streuung des von ihnen geförderten Schmiermittelvolumenstroms auf. Allerdings ist am Schmiermittelreservoir eine Messeinrichtung angeordnet, mit der feststellbar ist, welche Schmierflüssigkeitsmenge während eines Gießzyklus in die Druckgussvorrichtung gepumpt wurde.

In der Druckschrift US 2012 / 0 132 303 A1 wird ein Schmiermittelversorgungssystem mit einem Reservoir und einer Pumpe beschrieben. Die Pumpe wird durch einen Schrittmotor angetrieben, der über eine Gewindespindel den Kolben eines Zylinders bewegt. Durch die Steuerung des Motors kann der Hub des Kolbens und somit die eingebrachte Schmiermittelmenge beeinflusst werden.

Mit den beschriebenen bisherigen Systemen lässt sich eine Verringerung des Schmiermitteleinsatzes pro Gießzyklus von den früher üblichen 20 bis 30 ml bereits auf einen wesentlich geringeren Anteil reduzieren.

Der Erfindung liegt die Aufgabe zugrunde, eine Druckgussvorrichtung in Verbindung mit einem Schmiermittelversorgungssystem weiter zu entwickeln, um die Schmiermittelmenge weiter zu reduzieren und einen möglichst effizienten Einsatz von Schmiermittel zu erzielen.

Die Erfindung wird bezüglich einer Druckgussvorrichtung durch die Merkmale des Anspruchs 1 und bezüglich eines Schmierverfahrens durch die Merkmale des Anspruchs 8 wiedergegeben. Die weiteren rückbezogenen Ansprüche betreffen vorteilhafte Aus- und Weiterbildungen der Erfindung.

Die Erfindung schließt eine Druckgussvorrichtung mit einer Füllkammer und einem Druckgießkolben mit Kolbenstange ein, welche verschiebbar in der Füllkammer angeordnet sind, wobei die Kolbenstange eine Schmiereinrichtung mit zumindest einem Schmiermittelkanal und zumindest einer Schmieröffnung aufweist, über die Schmiermittel in einen zwischen dem Außenumfang des Druckgießkolbens und einem Innenumfang der Füllkammer befindlichen Bereich eingebracht werden kann. Des Weiteren umfasst die Druckgussvorrichtung ein Schmiermittelversorgungssystem, welches Schmierflüssigkeit von einem Reservoir zur Schmiereinrichtung befördert. Das Schmiermittelversorgungssystem weist einen mit einem Schmiermittelzylinder zusammenwirkenden Zeit-Weg-gesteuerten Antrieb auf, wobei die Schmiermittelmenge über den Hub des Schmiermittelzylinders festgelegt ist. Im Schmiermittelzylinder ist eine vordefinierte Ölmenge aus dem Reservoir ansaugbar und über eine Ventilsteuerung in die Kolbenstange des Druckgießkolbens einbringbar.

Die Erfindung geht dabei von der Überlegung aus, dass zur Schmierung einer Füllkammer und des zugehörigen Druckgießkolbens ein Schmiermittelversorgungssystem eingesetzt wird, das mit möglichst wenig Schmiermittel eine sichere und verschleißarme Schmierung der Kolbenoberfläche und der Füllkammerinnenwand als Reibpaarung ermöglicht. Bei der erfindungsgemäßen Lösung wird in einem Schmiermittelzylinder eine vordefinierte Ölmenge aus einem Reservoir angesaugt und anschließend über eine entsprechende Ventilsteuerung in die Kolbenstange des Druckgießkolbens eingebracht. Die jeweilige Schmiermittelmenge wird lediglich über den Hub des Schmiermittelzylinders festgelegt und genau gesteuert, wobei dieser beispielsweise eine Gesamtmenge von 0,5 bis 15 ml für im Regelfall einen Einspritzvorgang aufnehmen kann. Der Hub des Schmiermittelzylinders legt auch das Volumen der im Zylinder aufgenommenen und später eingespritzten Schmiermittelmenge fest. Folglich wird für einen gesamten Maschinenzyklus zunächst aus dem Reservoir eine vorbestimmte Schmiermittelmenge aufgenommen und die aufgenommene Menge in einem weiteren Einbringvorgang zur Füllkammer- und Druckgießkolbenschmierung in die Druckgussvorrichtung weitergeleitet. Das Einbringen des Schmiermittels in die Druckgussvorrichtung über die Schmieröffnungen am vorderen Ende der Kolbenstange kann in einem konstanten Schmiermittelstrom oder auch in einer Art und Weise eingebracht werden, dass über einem Druckgießkolbenhub die Menge lokal unterschiedlich verteilt wird. Eine ungleiche Verteilung kann erforderlich sein, wenn die Innenfläche der Füllkammer oder die Außenfläche des Druckgießkolbens in Abhängigkeit von den Gießparametern und dem Gießverlauf variabel geschmiert werden muss. Das Einspritzen des Schmieröls erfolgt während des Herausziehens des Druckgießkolbens über ein vordefiniertes automatisiertes Ablaufschema, das maschinenseitig von einer entsprechenden Programmsteuerung abgearbeitet wird. Die Steuerung kann dabei für den Benutzer grafisch unterstützt auf einem Bildschirm dargestellt und auch editiert werden. Für jedes Bauteil kann die Schmiermittelmenge protokolliert werden.

Die Steuerung des Schmiervorgangs kann folglich darauf basieren, dass von einer Steuereinheit ein Startsignal und ein Stoppsignal an das Schmiermittelversorgungssystem gesendet wird. In diesem Falle wird dann die Zeit zwischen Start und Stopp erfasst und entsprechend in diesem vorgegebenen Zeitraum dosiert.

Alternativ kommt auch ein integriertes Wegmesssystem in Betracht. Die Maschinensteuerung erkennt auf dem Rückweg des Druckgießkolbens genau, an welcher Position sich der Kolben gerade befindet. Dies bedeutet, dass die Maschinensteuerung dem Schmiermittelversorgungssystem genau vorgeben kann, nach wie vielen Millimetern des Kolbenrückwegs und damit an welcher Stelle der Gießkammer die größte Reibung auftritt und wo infolge dessen die Schmiermenge erhöht werden müsste. Die Steuerung der zu dosierenden Schmiermittelmenge ist damit auch über ein Wegmesssystem möglich.

Zudem kann ein Datenaustausch des Schmiermittelversorgungssystems mit an der Füllkammer, dem Druckgießkolben oder der Kolbenstange gewonnene Messdaten für eine stetige Optimierung des Schmiervorgangs herangezogen werden. Die Daten können über Sensoren zur Weg- bzw. Kraftmessung am Kolben beim Einschießen der Schmelze oder beim Zurückziehen des Druckgießkolbens gemessen werden. Insbesondere sind dabei auch die zeitlichen Verläufe für das Einstellen und Optimieren von variablen Schmierprofilen von Interesse.

Der besondere Vorteil besteht darin, dass die Schmiermittelmenge genau dosiert und in einem möglichst geringen Anteil in die Druckgussvorrichtung mit einer gezielten Mengenverteilung eingebracht wird. Durch eine präzise Steuerung kann damit auch der Schmiergrad während eines Maschinenzyklus noch variiert werden. Hierzu werden zur Bestimmung der Schmiermittelmenge keine weiteren Messeinrichtungen zur Prozessüberwachung benötigt. Allein aus der Feinsteuerung des Hubs im Schmiermittelzylinder folgt eine ausreichend genaue Mengenvorgabe für den Betrieb der Anlage.

In bevorzugter Ausgestaltung der Erfindung kann der Zeit-Weg-gesteuerte Antrieb ein servoelektrischer Antrieb sein. Vorteilhafterweise kann der servoelektrische Antrieb einen Servomotor mit einer Gewindespindel aufweisen. Als Gewindespindeln kommen beispielsweise Kugelroll-, Trapez- oder Gewinderollspindeln in Betracht. Der servoelektrische Antrieb basiert insbesondere auf einer Gewindespindel mit Führung, die in einem Gehäuse angeordnet ist. Der Antrieb der Spindel erfolgt durch den Servomotor über dessen Drehbewegung, welche über den Gewindespindeltrieb in eine Linearbewegung überführt wird. Servomotoren können Schrittmotoren oder auch frequenzgeregelte Motoren sein. Beispielsweise verbindet ein Flansch den Spindelantrieb mit dem Schmiermittelzylinder. Zur Regelung der Aufnahme und Abgabe des Schmiermittels sind die Prozessparameter zur Steuerung des servoelektrischen Antriebs, wie beispielsweise Vorschubgeschwindigkeiten, Brems- und Beschleunigungsrampen, frei programmierbar. Gegebenenfalls verbleibt im Schmiermittelzylinder eine gewisse Restmenge des gerade nicht benötigten Schmiermittels zurück, die beim nächsten Prozesszyklus mit als Übervorrat berücksichtigt wird. Über den jeweils einprogrammierten Kolbenhub lässt sich im Schmiermittelzylinder die minimal benötigte Schmierstoffmenge aufziehen und einem Prozesszyklus der Maschine zur Verfügung stellen. Auf diese Weise lassen sich die Betriebsbedingungen zur Schmierung einer Druckgussmaschine optimieren und ein stabiler Produktionsprozess mit hoher Prozesssicherheit erzielen.

Vorteilhafterweise kann die Kolbenstange eine Druckluftversorgungseinrichtung aufweisen, durch welche die Schmiermittelmenge über die zumindest eine Schmieröffnung der Schmiereinrichtung zerstäubt wird. Mit Hilfe der Druckluft wird das Schmiermittel zu einem Sprühnebel in Form eines Ölnebels zerstäubt und damit gleichmäßig auf der Außenseite des Druckgießkolbens und der Innenwandung der Füllkammer aufgebracht. In Abhängigkeit vom jeweils vorhandenen Schmiermittelfluss in der Kolbenstange, kann eine dazu passende Menge Druckluft zur Zerstäubung zugeführt werden. Die Anschlüsse können dabei vorzugsweise am hinteren Ende der Kolbenstange angebracht sein, wo die Zuleitung des Schmiermittels sowie auch gegebenenfalls des Kühlmittels baulich keine Probleme bereitet und dabei die Kolbenbewegung nicht behindert wird. Hierdurch lassen sich sowohl durch den Schmiermittelfluss als auch durch die Einwirkung der Druckluft unterschiedlich mit Schmiermittel belegte Abschnitte entlang der Druckgießkolbenführung zur Erzielung einer optimalen Schmierung realisieren.

Bevorzugt kann der Schmiermittelzylinder eine Schmiermittelmenge von maximal 15 ml aufnehmen. Weiter bevorzugt beträgt die Schmiermittelmenge unter 5 ml bis zu 2 ml und sogar bis unter 3 ml bis zu 2 ml. Durch eine möglichst geringere Schmiermittelmenge ergibt sich auch eine höhere Bauteilqualität des Gussteils. Trotz der vorgesehenen Verringerung des Schmiermitteleinsatzes pro Gießzyklus, können durch die erfindungsgemäße Vorrichtung dennoch lange Standzeiten der durch Abrieb belasteten Bauteile erzielt werden.

Vorteilhafterweise können an der Kolbenstange eine Vielzahl von Schmieröffnungen angeordnet sein. Die Austrittsöffnungen sind im Regelfall nahe der Stirnseite der Kolbenstange um den Außenumfang, gegebenenfalls in einer Ringnut, angeordnet. Das im Betrieb über die Schmieröffnungen verteilte Schmiermittel wird bei der Bewegung des Kolbens in die Füllkammer eingebracht und über die gesamte Oberfläche der Innenwandung der Füllkammer verteilt, wodurch sich eine optimale Schmierung des Druckgusskolbens ergibt. Dadurch lässt sich sowohl die Lebensdauer des Kolbens als auch die der Füllkammer deutlich erhöhen.

Erfindungsgemäß ist eine Kraftmesseinrichtung zur Bestimmung der Reibkräfte angeordnet. Die Kraftmesseinrichtung ist im Druckgießkolben oder an bzw. in der Kolbenstange oder im Schussaggregat der Druckgussmaschine integriert. Damit kann eine Aussage über den Verschleißzustand der betroffenen Bauteile gemacht werden. Die gemessenen Reibkräfte während eines Betriebszyklus lassen zudem einen Rückschluss auf die benötigte Menge an Schmiermittel zu. Aus dieser Information kann lokal in bestimmten Schmierabschnitten der Schmiermittelbedarf variiert und optimal auf die Reibverhältnisse angepasst werden. Die Betriebsbedingungen für die Druckgussmaschine werden auf diese Weise mit jedem Schuss erfasst und entsprechend angepasst.

Bei einer vorteilhaften Ausführungsform der Erfindung kann das Schmiermittel in dem zwischen dem Außenumfang des Druckgießkolbens und dem Innenumfang der Füllkammer befindlichen Bereich in der Menge lokal dosiert einbringbar sein. Beim Betrieb einer Druckgussvorrichtung werden sowohl die Füllkammer wie auch der Druckgießkolben unterschiedlichen mechanischen und thermischen Belastungen ausgesetzt. Von diesen Belastungen abhängig sind letztendlich auch die Reibverhältnisse der gegeneinander mechanisch bewegten Teile. Die sich beim "Schuss" zeitlich ändernden Verschleißbedingungen können durch eine 1 lokale Dosierung des Schmiermittels entsprechend berücksichtigt werden, wodurch sich die Standzeit der vom Verschleiß betroffenen einzelnen Bauteile wesentlich erhöhen lässt.

Ein weiterer Aspekt der Erfindung schließt ein Verfahren zur Schmierung einer erfindungsgemäßen Druckgussvorrichtung mittels einer Schmiereinrichtung und eines Schmiermittelversorgungssystems ein, wobei:
- über einen servoelektrischen Antrieb ein Schmiermittelzylinder betätigt wird,
- über die Betätigung des Schmiermittelzylinders Schmiermittel aus einem Reservoir über eine Saugleitung entnommen wird,
- die Saugleitung mittels eines ersten Ventils verschlossen wird,
- ein zweites Ventil einer mit der Schmiereinrichtung verbundenen Druckleitung geöffnet wird,
- eine definierte Schmiermittelmenge über die Schmiereinrichtung in einen zwischen dem Außenumfang des Druckgießkolbens und einem Innenumfang der Füllkammer befindlichen Bereich der Druckgussvorrichtung eingebracht wird,
- mittels einer Kraftmesseinrichtung die während eines Betriebszyklus in der Druckgussvorrichtung wirkenden Reibkräfte ermittelt werden und
- anhand der ermittelten Reibkräfte die eingebrachte Schmiermittelmenge auf die Reibverhältnisse angepasst wird.

Ausführungsbeispiele der Erfindung werden anhand der schematischen Zeichnung näher erläutert.

Darin zeigt:

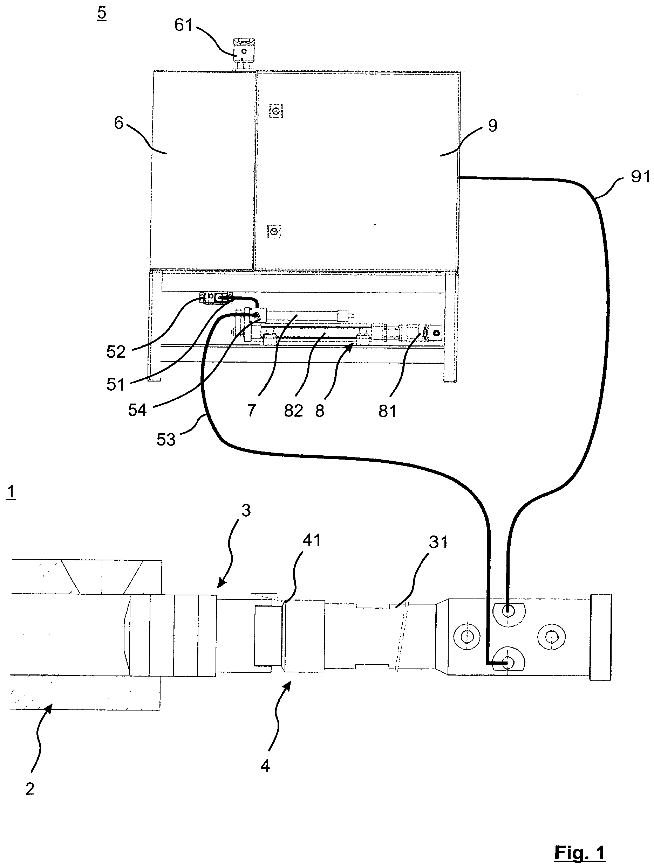

- Fig. 1: schematisch eine Druckgussvorrichtung mit einem Schmiermittelversorgungssystem.

Einander entsprechende Teile sind in der Figur mit denselben Bezugszeichen versehen.

Die einzige Fig. 1 zeigt schematisch eine Druckgussvorrichtung 1 mit einer nur zum Teil dargestellten Füllkammer 2 und einem Druckgießkolben 3 mit Kolbenstange 31, der in seiner Stellung am Anfang eines Gießzyklus angeordnet ist. Die Kolbenstange 31 beinhaltet eine Schmiereinrichtung 4 mit einem innen liegenden und in der Figur nicht sichtbaren Schmiermittelkanal und Schmieröffnungen 41. Über die Schmieröffnungen 41 tritt das Schmiermittel zwischen dem Außenumfang des Druckgießkolbens 3 und dem Innenumfang der Füllkammer 2 ein.

Des weiteren zeigt Fig. 1 ein Schmiermittelversorgungssystem 5, welches Schmierflüssigkeit von einem Reservoir 6 zur Schmiereinrichtung 4 befördert. Hierzu wird mittels des freigeschalteten ersten Ventils 52 über die Saugleitung 51 Schmiermittel aus dem Reservoir 6 entnommen. Nachfolgend wird die Saugleitung 51 mittels eines ersten Ventils 52 verschlossen und ein zweites Ventil 54 einer mit der Schmiereinrichtung 4 verbundenen Druckleitung 53 geöffnet; wodurch die vorbestimmte Schmiermittelmenge über die Schmiereinrichtung 4 in einen zwischen dem Außenumfang des Druckgießkolbens 3 und einem Innenumfang der Füllkammer 2 befindlichen Bereich der Druckgussvorrichtung 1 eingebracht wird. Am Reservoir 6 ist ein Füllstandssensor 61 angeordnet, der den gesamten Tankinhalt überwacht. Das Schmiermittelversorgungssystem 5 umfasst einen mit einem Schmiermittelzylinder 7 zusammenwirkenden servoelektrischen Antrieb 8 mit Weg-ZeitSteuerung, wobei die Schmiermittelmenge über den Hub eines Kolbens im Schmiermittelzylinder 7 festgelegt ist.

Der servoelektrische Antrieb 8 besteht aus einem Servomotor 81 mit einer Gewindespindel 82, welche eine Drehbewegung in einen Linearantrieb wandelt. Zudem ist an der Kolbenstange 31 eine Druckluftversorgungseinrichtung 9 mit einer Druckluftleitung 91 angebracht, durch welche die Schmiermittelmenge über die Schmieröffnung 41 der Schmiereinrichtung 4 zerstäubt wird.

### Bezugszeichenliste

- 1: Druckgussvorrichtung
- 2: Füllkammer
- 3: Druckgießkolben
- 31: Kolbenstange
- 4: Schmiereinrichtung
- 41: Schmieröffnung
- 5: Schmiermittelversorgungssystem
- 51: Saugleitung
- 52: erstes Ventil
- 53: Druckleitung
- 54: zweites Ventil
- 6: Reservoir
- 61: Füllstandssensor
- 7: Schmiermittelzylinder
- 8: servoelektrischer Antrieb mit Zeit-Weg-Steuerung
- 81: Servomotor
- 82: Gewindespindel
- 9: Druckluftversorgungseinrichtung
- 91: Druckluftleitung

## Patentansprüche

1. Druckgussvorrichtung (1) mit
- einer Füllkammer (2) und einem Druckgießkolben (3) mit Kolbenstange (31), welche verschiebbar in der Füllkammer (2) angeordnet sind, wobei die Kolbenstange (31) eine Schmiereinrichtung (4) mit zumindest einem Schmiermittelkanal und zumindest einer Schmieröffnung (41) aufweist, über die Schmiermittel in einen zwischen dem Außenumfang des Druckgießkolbens (3) und einem Innenumfang der Füllkammer (2) befindlichen Bereich eingebracht werden kann, und
- einem Schmiermittelversorgungssystem (5), welches Schmierflüssigkeit von einem Reservoir (6) zur Schmiereinrichtung (4) befördert,
**dadurch gekennzeichnet,**
- **dass** das Schmiermittelversorgungssystem (5) einen mit einem Schmiermittelzylinder (7) zusammenwirkenden Zeit-Weg-gesteuerten Antrieb (8) aufweist, wobei die Schmiermittelmenge über den Hub des Schmiermittelzylinders (7) festgelegt ist,
- **dass** im Schmiermittelzylinder (7) eine vordefinierte Ölmenge aus dem Reservoir (6) ansaugbar und über eine Ventilsteuerung (52, 54) in die Kolbenstange (31) des Druckgießkolbens (3) einbringbar ist und
- **dass** eine Kraftmesseinrichtung zur Bestimmung der Reibkräfte, die während eines Betriebszyklus in der Druckgussvorrichtung wirken, im Druckgießkolben oder an bzw. in der Kolbenstange oder im Schussaggregat der Druckgussmaschine integriert angeordnet ist.

2. Druckgussvorrichtung (1) nach Anspruch 1, **dadurch gekennzeichnet, dass** der Zeit-Weg-gesteuerte Antrieb (8) ein servoelektrischer Antrieb ist.

3. Druckgussvorrichtung (1) nach Anspruch 2, **dadurch gekennzeichnet, dass** der servoelektrische Antrieb (8) einen Servomotor (81) mit einer Gewindespindel (82) aufweist.

4. Druckgussvorrichtung (1) nach einem der Ansprüche 1 bis 3, **dadurch gekennzeichnet, dass** die Kolbenstange (31) eine Druckluftversorgungseinrichtung (9) aufweist, durch welche die Schmiermittelmenge über die zumindest eine Schmieröffnung (41) der Schmiereinrichtung (4) zerstäubt wird.

5. Druckgussvorrichtung (1) nach einem der Ansprüche 1 bis 4, **dadurch gekennzeichnet, dass** der Schmiermittelzylinder (7) eine Schmiermittelmenge von maximal 15 ml, bevorzugt unter 5 ml bis zu 2 ml aufnimmt.

6. Druckgussvorrichtung (1) nach einem der Ansprüche 1 bis 5, **dadurch gekennzeichnet, dass** an der Kolbenstange (31) eine Vielzahl von Schmieröffnungen (41) angeordnet sind.

7. Druckgussvorrichtung (1) nach einem der Ansprüche 1 bis 6, **dadurch gekennzeichnet, dass** das Schmiermittel in den zwischen dem Außenumfang des Druckgießkolbens (3) und dem Innenumfang der Füllkammer (2) befindlichen Bereich in der Menge lokal dosiert einbringbar ist.

8. Verfahren zur Schmierung einer Druckgussvorrichtung (1) nach einem der Ansprüche 1 bis 7 mittels einer Schmiereinrichtung (4) und eines Schmiermittelversorgungssystems (5), **dadurch gekennzeichnet,**
- **dass** über einen servoelektrischen Antrieb (8) ein Schmiermittelzylinder (7) betätigt wird,
- **dass** über die Betätigung des Schmiermittelzylinders (7) Schmiermittel aus einem Reservoir (6) über eine Saugleitung (51) entnommen wird,
- **dass** die Saugleitung (51) mittels eines ersten Ventils (52) verschlossen wird,
- **dass** ein zweites Ventil (54) einer mit der Schmiereinrichtung (4) verbundenen Druckleitung (53) geöffnet wird,
- **dass** eine definierte Schmiermittelmenge über die Schmiereinrichtung (4) in einen zwischen dem Außenumfang des Druckgießkolbens (3) und einem Innenumfang der Füllkammer (2) befindlichen Bereich der Druckgussvorrichtung (1) eingebracht wird,
- **dass** mittels einer Kraftmesseinrichtung die während eines Betriebszyklus in der Druckgussvorrichtung wirkenden Reibkräfte ermittelt werden und
- **dass** anhand der ermittelten Reibkräfte die eingebrachte Schmiermittelmenge auf die Reibverhältnisse angepasst wird.

## Claims

1. Pressure die-casting apparatus (1) having
- a filling chamber (2) and a pressure die-casting piston (3) having piston rods (31) which are displaceably arranged in the filling chamber (2), wherein the piston rod (31) has a lubrication device (4) having at least one lubricant channel and at least one lubrication opening (41), via which lubricant can be introduced into a region located between the outer circumference of the pressure die-casting piston (3) and an inner circumference of the filling chamber (2), and
- a lubricant supply system (5) which conveys lubricating fluid from a reservoir (6) to the lubrication device (4), **characterised in that**
- the lubricant supply system (5) has a time/path-controlled drive (8) which cooperates with a lubricant cylinder (7), wherein the quantity of lubricant over the travel of the lubricant cylinder (7) is determined,
- **in that** a predefined quantity of oil from the reservoir (6) can be drawn in the lubricant cylinder (7) and can be introduced via a valve control (52, 54) into the piston rod (31) of the pressure die-casting piston (3), and
- **in that** a force measurement device for determining the friction forces which are active during an operating cycle in the pressure die-casting apparatus is arranged so as to be integrated in the pressure die-casting piston or on or in the piston rod or in the filling unit of the pressure die-casting machine.

2. Pressure die-casting apparatus (1) according to claim 1, **characterised in that** the time/path-controlled drive (8) is a servo electric drive.

3. Pressure die-casting apparatus (1) according to claim 2, **characterised in that** the servo electric drive (8) has a servo motor (81) having a threaded spindle (82).

4. Pressure die-casting apparatus (1) according to any one of claims 1 to 3, **characterised in that** the piston rod (31) has a compressed air supply device (9) by means of which the quantity of lubricant is atomised via the at least one lubrication opening (41) of the lubrication device (4).

5. Pressure die-casting apparatus (1) according to any one of claims 1 to 4, **characterised in that** the lubricant cylinder (7) receives a lubricant quantity of a maximum of 15 ml, preferably below 5 ml up to 2 ml.

6. Pressure die-casting apparatus (1) according to any one of claims 1 to 5, **characterised in that** a large number of lubrication openings (41) are arranged on the piston rod (31).

7. Pressure die-casting apparatus (1) according to any one of claims 1 to 6, **characterised in that** the lubricant can be introduced into the region located between the outer circumference of the pressure die-casting piston (3) and the inner circumference of the filling chamber (2) in a locally metered quantity.

8. Method for lubricating a pressure die-casting apparatus (1) according to any one of claims 1 to 7 by means of a lubrication device (4) and a lubricant supply system (5), **characterised in that**
- a lubricant cylinder (7) is activated by means of a servo electric drive (8),
- **in that** lubricant is removed from a reservoir (6) by means of a suction line (51) by means of the activation of the lubricant cylinder (7),
- **in that** the section line (51) is closed by means of a first valve (52),
- **in that** a second valve (54) of a pressure line (53) which is connected to the lubrication device (4) is opened,
- **in that** a defined quantity of lubricant is introduced via the lubrication device (4) into a region of the pressure die-casting apparatus (1) located between the outer circumference of the pressure die-casting piston (3) and an inner circumference of the filling chamber (2),
- **in that** by means of a force measurement device the friction forces which are active during an operating cycle in the pressure-die casting apparatus are established, and
- **in that** with reference to the established friction forces the quantity of lubricant introduced is adapted to the friction relationships.

## Revendications

1. Dispositif de coulée sous pression (1) avec
- une chambre de remplissage (2) et un piston de coulée sous pression (3) avec des tiges de piston (31), lesquelles sont disposées dans la chambre de remplissage (2) en pouvant être décalées, la tige de piston (31) présentant une installation de lubrification (4) avec au moins un canal de lubrifiant et au moins une ouverture de lubrification (41), par l'intermédiaire de laquelle le lubrifiant peut être introduit dans un domaine se trouvant entre la circonférence externe du piston de coulée sous pression (3) et une circonférence interne de la chambre de remplissage (2), et
- un système d'alimentation en lubrifiant (5), lequel achemine du liquide de lubrifiant d'un réservoir (6) jusqu'à l'installation de lubrification (4),
**caractérisé**
- **en ce que** le système d'alimentation en lubrifiant (5) présente un mécanisme de commande (8) commandé en temps-course agissant en coopération avec un cylindre de lubrifiant (7), la quantité de lubrifiant étant déterminée par l'élévation du cylindre de lubrifiant (7),
- **en ce que** dans le cylindre de lubrifiant (7) une quantité d'huile prédéterminée peut être aspirée du réservoir (6) et être introduite par l'intermédiaire d'une régulation de soupape (52, 54) dans la tige de piston (31) du piston de coulée sous pression (3) et
- **en ce qu'**une installation de mesure de force pour déterminer les forces de frottement, qui agissent pendant un cycle de fonctionnement dans le dispositif de coulée sous pression, est disposée dans le piston de coulée sous pression ou respectivement dans la tige de piston ou dans l'agrégat d'injection de la machine de coulée sous pression.

2. Dispositif de coulée sous pression (1) selon la revendication 1, **caractérisé en ce que** le mécanisme de commande commandé en temps-course (8) est un mécanisme de commande servoélectrique.

3. Dispositif de coulée sous pression (1) selon la revendication 2, **caractérisé en ce que** le mécanisme de commande servoélectrique (8) présente un servomoteur (81) avec une broche filetée (82).

4. Dispositif de coulée sous pression (1) selon l'une quelconque des revendications 1 à 3, **caractérisé en ce que** la tige de piston (31) présente une installation d'alimentation en air comprimé (9), par l'intermédiaire de laquelle la quantité de lubrifiant est pulvérisée sur au moins une ouverture de lubrification (41) de l'installation de lubrification (4).

5. Dispositif de coulée sous pression (1) selon l'une quelconque des revendications 1 à 4, **caractérisé en ce que** le cylindre de lubrifiant (7) prélève une quantité de lubrifiant au maximum de 15 ml, de préférence inférieure à 5 ml jusqu'à 2 ml.

6. Dispositif de coulée sous pression (1) selon l'une quelconque des revendications 1 à 5, **caractérisé en ce que** de nombreuses ouvertures de lubrification (41) sont disposées sur la tige de piston (31).

7. Dispositif de coulée sous pression (1) selon l'une quelconque des revendications 1 à 6, **caractérisé en ce que** le lubrifiant peut être introduit dans une quantité localement dosée dans le domaine se trouvant entre la circonférence externe du piston de coulée sous pression (3) et la circonférence interne de la chambre de remplissage (2).

8. Procédé pour lubrifier un dispositif de coulée sous pression (1) selon l'une quelconque des revendications 1 à 7 au moyen d'une installation de lubrification (4) et d'un système d'alimentation en lubrifiant (5), **caractérisé**
- **en ce qu'**un cylindre de lubrifiant (7) est actionné par l'intermédiaire d'un mécanisme de commande servoélectrique (8),
- **en ce qu'**en actionnant le cylindre de lubrifiant (7) du lubrifiant peut être prélevé d'un réservoir (6) par l'intermédiaire d'une canalisation d'aspiration (51),
- **en ce que** la canalisation d'aspiration (51) est fermée au moyen d'une première soupape (52),
- **en ce qu'**une seconde soupape (54) est ouverte avec une canalisation sous pression (53) liée à l'installation de lubrification (4),
- **en ce qu'**une quantité définie de lubrifiant est introduite par l'intermédiaire de l'installation de lubrification (4) dans un domaine se trouvant entre la circonférence externe du piston de coulée sous pression (3) et une circonférence interne de la chambre de remplissage (2) du dispositif de coulée sous pression (1),
- **en ce qu'**au moyen d'une installation de mesure de force les forces de frottement agissant pendant un cycle de fonctionnement dans le dispositif de coulée sous pression sont obtenues et
- **en ce qu'**à l'aide des forces de frottement obtenues la quantité de lubrifiant introduite est adaptée aux taux de frottement.
